# EUROPÄISCHE PATENTSCHRIFT

(11) **EP 2 595 887 B1**
(45) Veröffentlichungstag und Bekanntmachung des Hinweises auf die Patenterteilung: **25.04.2018**
(21) Anmeldenummer: 11729572.5
(22) Anmeldetag: 30.06.2011
(51) Int. Cl.: B65B 3/02, B29C 49/42, B65D 1/02

(54) **VERFAHREN UND VORRICHTUNG ZUM HERSTELLEN UND BEFÜLLEN VON BEHÄLTERN AUS THERMOPLASTISCHEM KUNSTSTOFF**
METHOD AND DEVICE FOR PRODUCING AND FILLING CONTAINERS MADE OF THERMOPLASTIC PLASTIC
PROCÉDÉ ET DISPOSITIF POUR FABRIQUER ET REMPLIR DES RÉCIPIENTS EN MATIÈRE THERMOPLASTIQUE

(30) Priorität: 20.07.2010 DE 102010027617
(43) Veröffentlichungstag der Anmeldung: 29.05.2013
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels und Partner, Patentanwälte
(86) Internationale Anmeldenummer: PCT/EP2011/003245
(87) Internationale Veröffentlichungsnummer: WO 2012/019672

(56) Entgegenhaltungen:
- DE-A1-102008 004 088
- JP-A- 8 244 749
- US-B1- 6 381 926

## Beschreibung

Die Erfindung betrifft ein Verfahren zum Herstellen und Befüllen von Behältern aus thermoplastischem Kunststoff, mit den Merkmalen im Oberbegriff von Patentanspruch 1. Außerdem betrifft die Erfindung eine Vorrichtung zur Durchführung des Verfahrens sowie einen derart hergestellten Behälter.

Verfahren dieser Art, wie das System bottelpack®, werden verbreitet eingesetzt, um Behältnisse verschiedener Formen, Größen und für unterschiedliche Verwendungszwecke herzustellen. Hierbei kann es sich auch um coextrudierte Behältnisse handeln. Insbesondere kann es sich hierbei um transparente, flexible Behältnisse aus Polyethylen oder Polypropylen handeln. Vielfach werden in aseptischem Betrieb in einem Arbeitsgang die Behältnisse sowohl hergestellt, als auch mit sterilem Füllgut, beispielsweise Pharmazeutika befüllt und verschlossen. Das Dokument WO 2009/086864 A1 offenbart ein derartiges Verfahren.

Bei der Benutzung derartiger Behälter in der Medizin ist es für die Gebrauchseigenschaften wesentlich, dass die Entnahme des Füllgutes in geeigneter Weise erfolgen kann. Wenn es sich bei dem Füllgut beispielsweise um eine zu infundierende Flüssigkeit handelt, etwa ein Narkosemittel, dann muss sichergestellt sein, dass sich im Behälter lediglich ein minimales Restvolumen an Luft befindet, so dass die Flüssigkeit, wenn sie durch Zusammendrücken des flexiblen Behältnisses ausgedrückt wird, in sehr genauer Dosismenge abgegeben wird.

Durch die DE 10 2008 004 088 A1 ist ein Verfahren zum Herstellen von Behältern aus thermoplastischem Kunststoff bekannt, bei dem in eine Form, deren bewegbare Formteile in eine die Form öffnende Stellung bewegt sind, ein extrudierter Kunststoffschlauch eingeführt wird, der Schlauch durch einen an ihm wirksamen Druckgradienten aufgeweitet und zur Bildung der Behälterform an die Wand der Formteile angelegt wird und wobei ferner die Formteile für das Entformen des gebildeten Behälters in die die Form öffnende Stellung bewegt werden. Dadurch dass bei der bekannten Lösung der Behälterboden in der Form eines den Behälterhauptteil axial verlängernden, topfartigen Bodenteiles ausgebildet wird und dass dieses zur Bildung einer in den Behälterhauptteil ragenden Bodenerhebung ins Innere des Behälters umgestülpt wird, wirkt diese Bodenerhebung als eine Art Verdrängerkörper, der sich für das spätere vollständige Entleeren des Behälters nach Behälteröffnung in dessen Kopfbereich bewegen kann, so dass das darin befindliche Volumen des Füllgutes herausgedrückt und so das verbleibende Restvolumen minimiert ist.

Trotz dieser sehr vorteilhaft ausgestalteten Lösung verbleibt bei geschlossenem Behälter immer noch ein deutliches Restvolumen an Luft zwischen dem oberen Füllstandspegel, der in den Behälter eingeführten Flüssigkeit und dem Behälterverschluss.

Ausgehend von diesem Stand der Technik liegt daher der Erfindung die Aufgabe zugrunde, ein Verfahren zur Verfügung zu stellen, das neben einer rationellen Herstellung zur Befüllung eines Behälters sicherstellt, dass der derart hergestellte Behälter praktisch luftfrei ist.

Erfindungsgemäß ist diese Aufgabe durch ein Verfahren gelöst, das die Merkmale des Patentanspruches 1 in seiner Gesamtheit aufweist.

Demgemäß besteht eine wesentliche Besonderheit der Erfindung darin, dass ein in den Ausnehmungen der Kopfbacken befindlicher Teil des Kunststoffschlauches unter Bildung mindestens einer Entlüftungskanüle unverschlossen bleibt und dass beim Verdrängen des Behältervolumens der Pegel des Füllgutes derart angehoben wird, dass zumindest Luft aus dem Behälter über die jeweilige Entlüftungskanüle verdrängt wird, und durch Schließen der Kopfbacken oder von Zusatzkopfbacken die jeweiligen Entlüftungskanüle geschlossen wird.

Beim Formen des Behälterverschlusses aus dem Kunststoffschlauch wird so vorgegangen, dass ein Abschnitt des Kunststoffschlauches unverschlossen bleibt und eine Entlüftungskanüle gebildet wird. In demselben oder in einem zusätzlichen Verdrängungsschritt, bei dem der Pegel des Füllgutes entsprechend angehoben wird, wird nunmehr das Restvolumen an Luft aus dem Behälter über die Entlüftungskanüle verdrängt, wonach durch Schließen der Kopfbacken oder von Zusatzkopfbacken der Form die Entlüftungskanüle und damit der Behälter geschlossen werden. Bei derart angehobenem Flüssigkeitspegel verbleibt nach dem Verschluss der Entlüftungskanüle im Wesentlichen keinerlei oder nur noch ein geringes Luftvolumen innerhalb des Behälters. Die Entlüftungskanüle selbst oder Teile derselben kann bzw. können dann mit dem übrigen Abfall entfernt werden. Bei einer besonderen Ausgestaltung könnte der Pegel auch soweit angehoben oder weiter angehoben werden, dass Flüssigkeit über die jeweiligen Entlüftungskanäle nach außen verdrängt wird, was dann zu einem völlig luftfreien Behälterinhalt führen würde.

Wenn die Entlüftungskanüle am oberen Ende des Behälterverschlusses gebildet wird, kann jegliches relevantes Restvolumen an Luft beseitigt werden, ohne dass Füllgut bis in die Entlüftungskanüle hinein verdrängt werden müsste.

Vorzugsweise wird die Entlüftungskanüle durch die Zusatzkopfbacken unmittelbar an der Wand des Behälterverschlusses geschlossen, so dass die Entlüftungskanüle unmittelbar am Behälterverschluss abgetrennt werden kann und somit am Behälterverschluss kein größeres, überstehendes Restteil der Kanüle verbleibt. Mit besonderem Vorteil kann so vorgegangen werden, dass die Entlüftungskanüle durch die Zusatzkopfbacken nicht nur geschlossen, sondern an der Schließstelle oder Schweißstelle gleichzeitig abgetrennt wird. Die Zusatzkopfbacken verschließen den Entlüftungskanal und schaffen dergestalt eine Dünnstelle im Material anschließend an den Behälterverschluss durch die Schneidkanten, so dass auch die Möglichkeit besteht, bei einem nach der Entformung folgenden Stanzvorgang den sogenannten Kopfbutzen zusammen mit dem ehemaligen Entlüftungskanal, leicht zu entfernen.

Vorzugsweise wird die Entlüftungskanüle aus einem außerhalb des Zentralbereiches des Behälterverschlusses gelegenen Teil des Kunststoffschlauches gebildet. In vorteilhafter Weise bleibt dadurch der Zentralbereich des Behälterverschlusses frei von einer Ansatzstelle oder Schweißstelle der Entlüftungskanüle, so dass die Verwendbarkeit des Behälterverschlusses als Infusions-Anschlusskopf unbeeinträchtigt bleibt.

Gegenstand der Erfindung ist gemäß dem Anspruch 7 auch eine Vorrichtung zum Durchführen des Verfahrens, die bewegliche Formteile zum Formen eines Behälters aus einem extrudierten Kunststoffschlauch aufweist, wobei den Behälterverschluss bildende Haüptkopfbacken der Form in ihren Schließflächen Ausnehmungen aufweisen, die einen Teil des Kunststoffschlauches unter Bildung einer Entlüftungskanüle unverschlossen lassen, und wobei relativ zu den Hauptkopfbacken bewegbare Zusatzkopfbacken in eine die Entlüftungskanüle schließende Wirkposition bewegbar sind.

Dabei ist die Anordnung vorzugsweise so getroffen, dass die Zusatzkopfbacken in die Hauptkopfbacken derart integriert sind, dass sie, die Ausnehmungen durchdringend, in Richtung der Schließbewegungen der Hauptkopfbacken in die Wirkposition bewegbar sind.

In besonders vorteilhafter Weise können die Zusatzkopfbacken mittels in den Hauptkopfbacken befindlicher, druckmittelbetätigbarer Arbeitszylinder bewegbar sein. Anstelle von den genannten Arbeitszylindern können zusätzlich oder alternativ auch Servomotoren treten.

Nachstehend ist die Erfindung anhand der Zeichnung im Einzelnen erläutert. Es zeigen:
- Fig. 1: eine gegenüber einer praktischen Ausführungsform leicht ver-kleinert gezeichnete Seitenansicht eines Ausführungsbeispieles des erfindungsgemäß hergestellten Behälters in Form eines axial zusammendrückbaren Faltenbalges, dargestellt vor dem Abtren-nen einer Entlüftungskanüle;
- Fig. 2: eine gegenüber Fig. 1 verkleinert gezeichnete, perspektivische Schrägansicht des Behälters;
- Fig. 3: eine der Fig. 2 entsprechende Schrägansicht des Behälters nach Abtrennen der Entlüftungskanüle;
- Fig. 4: eine schematisch vereinfachte Darstellung einer teilweise ge-schlossenen Blasform mit darin geformtem Behälter, wobei der Betriebszustand des Befüllens des Behälters mit Füllgut gezeigt ist und die den Behälterverschluss formenden Kopfbacken der Form noch in offener Stellung gezeigt sind;
- Fig. 5: eine schematisch vereinfachte Draufsicht des Behälters von Fig. 4, wobei von den Formteilen lediglich die geöffneten Kopfbacken sichtbar sind;
- Fig. 6: eine der Fig. 4 ähnliche Darstellung, wobei jedoch in einem ersten Verdrängungsschritt der Füllpegel des Füllgutes angehoben ist;
- Fig. 7: eine der Fig. 5 entsprechende Draufsicht des Behälters von Fig. 6;
- Fig. 8: eine der Fig. 6 ähnliche Darstellung, wobei jedoch die Kopfbacken der Form geschlossen sind, so dass aus dem Kunststoffschlauch ein Behälterverschluss sowie eine Entlüftungskanüle geformt sind;
- Fig. 9: eine Draufsicht auf Fig. 8, demgegenüber jedoch in größerem Maßstab dargestellt;
- Fig. 10: eine der Fig. 8 ähnliche Darstellung, wobei der Füllpegel des Füllgutes jedoch in einem zweiten Verdrängungsschritt weiter angehoben ist;
- Fig. 11: eine der Fig. 9 entsprechende Draufsicht auf Fig. 10;
- Fig. 12: eine der Fig. 10 ähnliche Darstellung, wobei Zusatzkopfbacken geschlossen dargestellt sind, mittels deren die Entlüftungskanüle geschlossen und abgetrennt ist; und
- Fig. 13: eine der Fig. 11 entsprechende, die Zusatzkopfbacken in geschlossener Stellung zeigende Draufsicht auf Fig. 12.

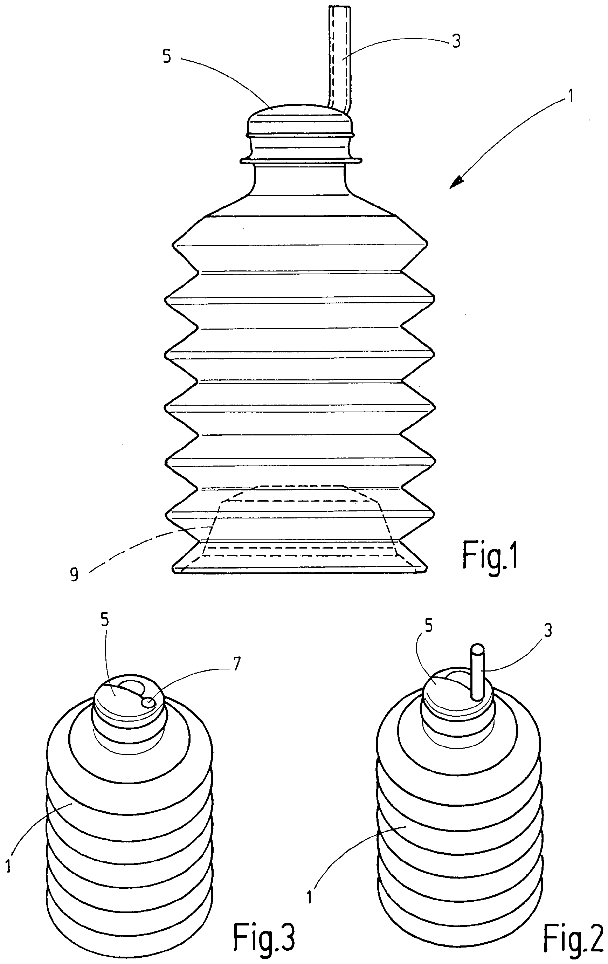

Nachstehend ist die Erfindung anhand des Beispieles eines faltenbalgartigen Behälters 1 erläutert, wie er in Fig. 1 bis 3 näher dargestellt ist. Es versteht sich, dass die Erfindung gleichermaßen für die Herstellung glattwandiger Behältnisse mit Vorteil einsetzbar ist. Die Fig. 1 und 2 zeigen den Behälter 1 in einem unfertigen Zustand, in dem er aus einer Blasformeinrichtung herausgenommen ist, ohne dass eine Entlüftungskanüle 3 verschlossen und vom Behälterverschluss 5 abgetrennt ist. Fig. 3 zeigt den Fertigzustand, bei dem die Entlüftungskanüle 3 an einer Schweiß- oder Ansatzstelle 7 vom Behälterverschluss 5 abgetrennt ist. Wie ersichtlich, befindet sich die Entlüftungskanüle 3 und damit die Ansatzstelle 7 versetzt außerhalb des Zentralbereiches des Behälterverschlusses 5.

Wie Fig. 1 zeigt, ist der Boden des Behälters 1 nicht ebenflächig geformt, sondern weist eine Einwölbung 9 nach innen auf. Beim Ausgeben der Flüssigkeit aus dem Behälter 1, durch Zusammendrücken des Faltenbalges ist daher die Flüssigkeit, ohne dass ein Restvolumen an Flüssigkeit verbleibt, aus dem Behälter 1 verdrängbar, weil die Auswölbung 9 einen Verdrängerkörper bildet, der die bei völligem Zusammendrücken des Faltenbalges verbleibende Totlänge kompensiert.

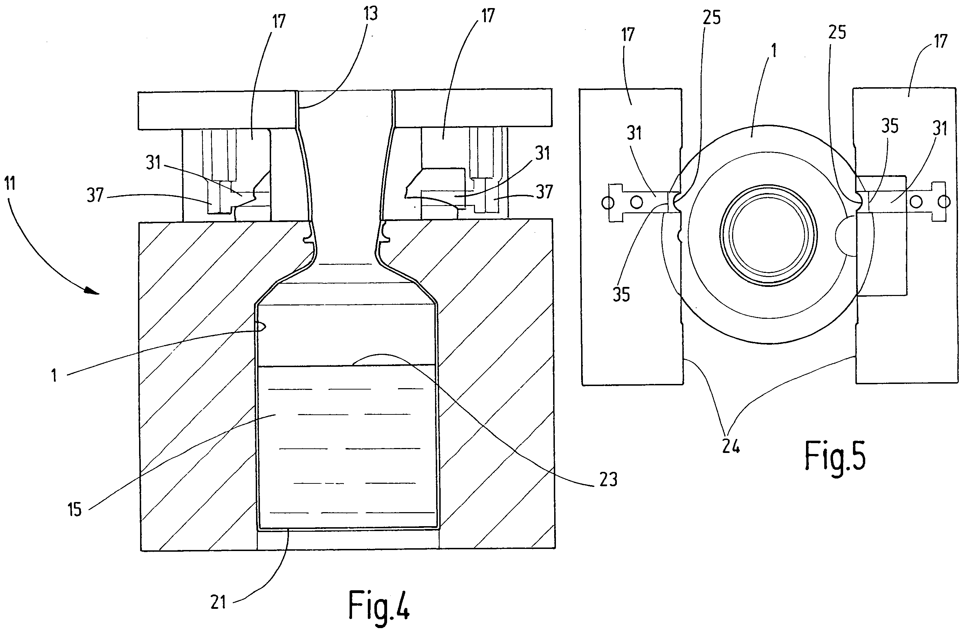

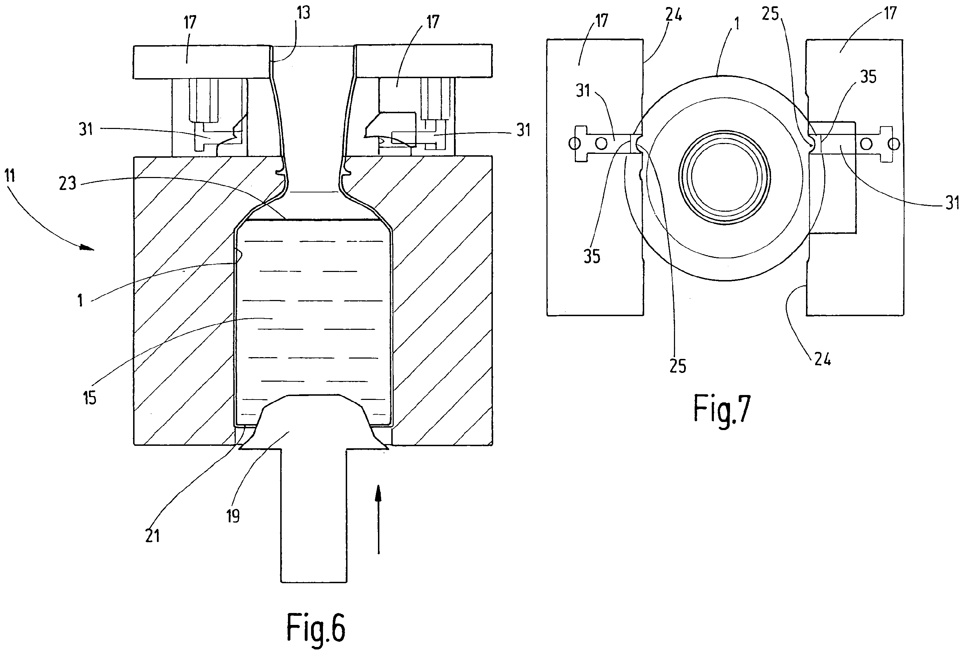

Die Fig. 4 bis 13 verdeutlichen den Ablauf des erfindungsgemäßen Verfahrens, das auf Grundlage des bekannten bottelpack®-Systems durchgeführt wird. Dabei zeigen Fig. 4 und 5 den in einer Blasform 11 aus einem Kunststoffschlauch 13 gebildeten Behälter 1 während des Befüllens mit flüssigem Füllgut 15, wobei sich die beweglichen Kopfbacken 17 der Blasform 11 in offener Stellung befinden, so dass durch diese Kopfbacken 17 noch kein Behälterverschluss gebildet ist und der Behälter 1 daher noch offen ist. Fig. 6 und 7 verdeutlichen einen ersten Verdrängungsschritt, bei dem mittels eines Verdrängerstempels 19 vom Boden 21 her Behältervolumen verdrängt wird, so dass der Flüssigkeitspegel 23 des Füllgutes 15 auf eine in Fig. 6 gezeigte Zwischenpegelhöhe ansteigt. Wiederum befinden sich die Kopfbacken 17 in offener Stellung, so dass die Draufsicht der Fig. 7 der Draufsicht von Fig. 5 entspricht.

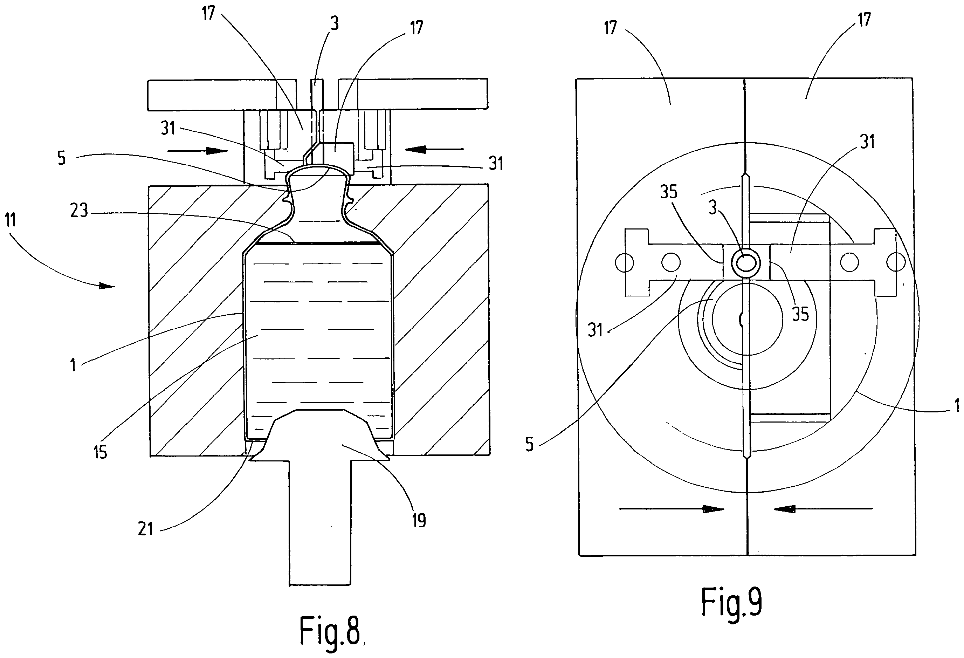

Wie aus den Fig. 5 und 7 hervorgeht, weisen die Kopfbacken 17 in ihren Schließflächen 24 einander zugekehrte, halbzylindrische Ausnehmungen 25 auf. Wenn die Kopfbacken 17 zusammengefahren werden, wie dies in Fig. 8 durch Pfeile angedeutet ist, und dadurch aus dem Kunststoffschlauch 13 ein Behälterverschluss 5 gebildet wird (siehe Fig. 8 und 9), bleibt ein in den Ausnehmungen 25 befindlicher Teil des Kunststoffschlauches 13 unverschlossen, so dass die in Fig. 1 und 2 gezeigte Entlüftungskanüle 3 gebildet wird. Die Ausnehmungen 25 befinden sich außerhalb des Zentralbereiches der Kopfbacken 17, siehe Fig. 5 und 7, so dass, wie erwähnt, die Entlüftungskanüle 3 am Behälterverschluss 5 außermittig mündet.

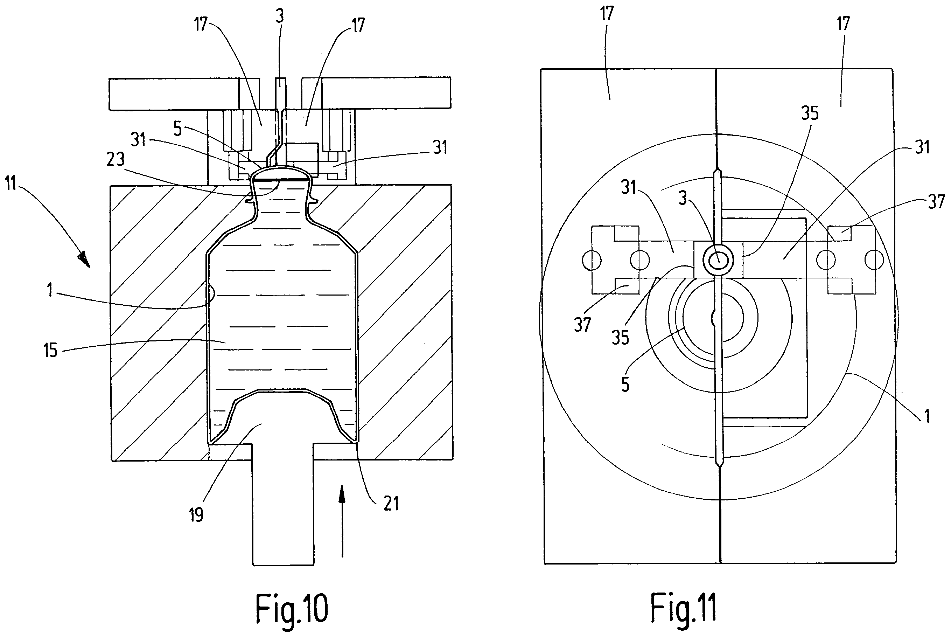

Fig. 10 und 11 verdeutlichen einen Zustand, bei dem nach Ausbildung des Behälterverschlusses 5 und der Entlüftungskanüle 3 bei weiterhin geschlossenen Kopfbacken 17 ein zweiter Verdrängungsschritt mittels des Verdrängerstempels 19 durchgeführt wird, so dass der Flüssigkeitspegel 23, während Luft aus dem Behälter 1 über die Entlüftungskanüle 3 ausströmt, bis auf die Nähe des Mündungsbereiches der Entlüftungskanüle 3 innerhalb des Behälterverschlusses 5 ansteigt, der Behälter 1 somit praktisch frei von Restluftvolumen ist.

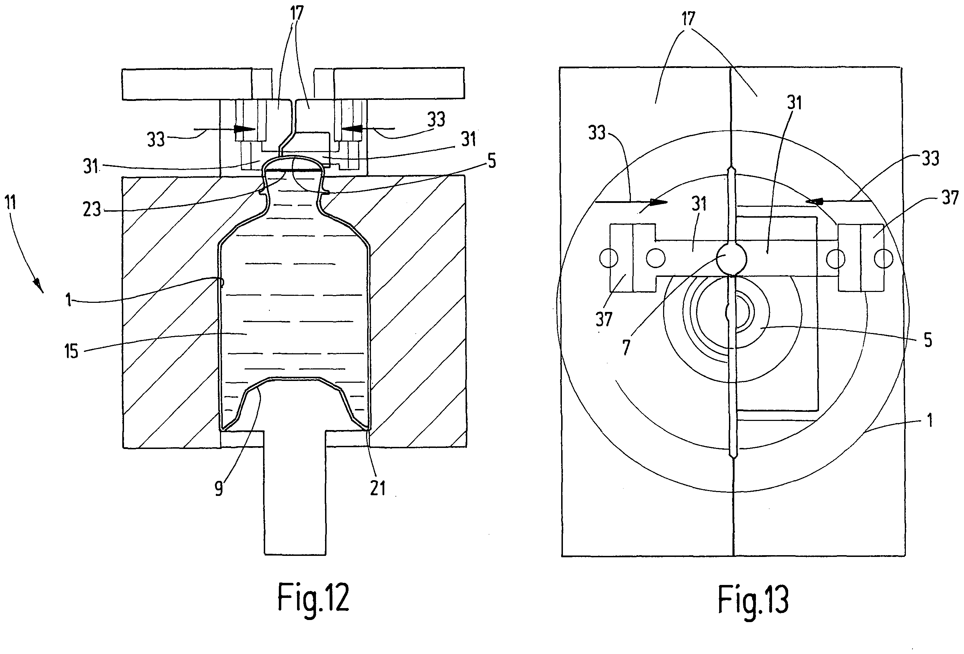

Nach Erreichen dieses Zustandes wird, wie in Fig. 12 und 13 gezeigt, die Entlüftungskanüle 3 geschlossen. Dies geschieht mittels in die Kopfbacken 17 integrierter Zusatzkopfbacken 31, die, wie mit Bewegungspfeilen 33 in Fig. 12 und 13 angedeutet, gegeneinander bewegbar sind. Die Zusatzkopfbacken 31 weisen Schweißkanten 35 auf, die an der Entlüftungskanüle 3 einen Schließ- und Trennvorgang durchführen, so dass die Entlüftungskanüle 3 an der Ansatzstelle 7 vom Behälterverschluss 5 abgetrennt wird. Die Betätigung der Zusatzkopfbacken 31 erfolgt mittels druckmittelbetätigbarer Betätigungszylinder 37 (Fig. 13).

## Patentansprüche

1. Verfahren zum Herstellen und Befüllen von Behältern (1) aus thermoplastischem Kunststoff, bei dem in eine geöffnete, bewegliche Formteile aufweisende Form (11) ein extrudierter Kunststoffschlauch (13) eingeführt wird, den Behälter (1) bildende Formteile geschlossen werden, wobei der Schlauch durch einen an ihm wirkenden Druckgradienten zu dem Behälter (1), vorzugsweise in Form eines Faltenbalges, aufgeweitet und mit Füllgut (15) befüllt wird, und der Pegel (23) des Füllgutes (15) durch Verdrängen von Behältervolumen in Richtung der Behälteröffnung angehoben wird, wobei durch Schließen von Kopfbacken (17) der Form (11) aus dem Schlauch (13) ein Behälterverschluss (5) für die Behälteröffnung geformt wird, **dadurch gekennzeichnet, dass** ein in den Ausnehmungen (25) der Kopfbacken (17) befindlicher Teil des Kunststoffschlauches (13) unter Bildung mindestens einer Entlüftungskanüle (3) unverschlossen bleibt, und dass beim Verdrängen des Behältervolumens der Pegel (23) des Füllgutes (15) derart angehoben wird, dass zumindest Luft aus dem Behälter (1) über die jeweilige Entlüftungskanüle (3) verdrängt wird, und durch Schließen der Kopfbacken (17) oder von Zusatzkopfbacken (31) die jeweilige Entlüftungskanüle (3) geschlossen wird.

2. Verfahren nach Anspruch 1, **dadurch gekennzeichnet, dass** die Entlüftungskanüle (3) im Bereich des oberen Endes des Behälterverschlusses (5) gebildet wird.

3. Verfahren nach Anspruch 2, **dadurch gekennzeichnet, dass** die Entlüftungskanüle (3) durch die Zusatzkopfbacken (31) unmittelbar an der Außenseite des Behälterverschlusses (5) geschlossen wird.

4. Verfahren nach Anspruch 3, **dadurch gekennzeichnet, dass** die Entlüftungskanüle (3) durch die Zusatzkopfbacken (31) unmittelbar an der Wand des Behälterverschlusses (5) abgetrennt wird.

5. Verfahren nach einem der Ansprüche 1 bis 4, **dadurch gekennzeichnet, dass** die Entlüftungskanüle (3) aus einem außerhalb des Zentralbereiches des Behälterverschlusses (5) gelegenen Teil des Kunststoffschlauches (13) gebildet wird.

6. Verfahren nach einem der Ansprüche 1 bis 5, **dadurch gekennzeichnet, dass** das Verdrängen von Behältervolumen derart durchgeführt wird, dass vom Boden (21) des Behälters her eine Auswölbung (9) des Bodens (21) ins Innere des Behälters (1) erzeugt wird.

7. Vorrichtung zum Durchführen des Verfahrens nach einem der Ansprüche 1 bis 6 mit beweglichen Formteilen zum Formen eines Behälters (1) aus einem extrudierten Kunststoffschlauch (13), **dadurch gekennzeichnet, dass** den Behälterverschluss (5) bildende Hauptkopfbacken (17) der Form (11) in ihren Schließflächen (24) Ausnehmungen (25) aufweisen, die einen Teil des Kunststoffschlauches (13) unter Bildung mindestens einer Entlüftungskanüle (3) unverschlossen lassen, und dass relativ zu den Hauptkopfbacken (17) bewegbare Zusatzkopfbacken (31) in eine die Entlüftungskanüle (3) schließende Wirkposition bewegbar sind.

8. Vorrichtung nach Anspruch 7, **dadurch gekennzeichnet, dass** die Zusatzkopfbacken (31) in die Hauptkopfbacken (17) derart integriert sind, dass sie, die Ausnehmungen (25) durchdringend, in Richtung der Schließbewegungen der Hauptkopfbacken (17) in die Wirkposition bewegbar sind.

9. Vorrichtung nach Anspruch 7 oder 8, **dadurch gekennzeichnet, dass** die Zusatzkopfbacken (31) mittels in den Hauptkopfbacken (17) befindlicher, druckmittelbetätigbarer Arbeitszylinder (37) bewegbar sind.

## Claims

1. A method for producing and filling containers (1) made of thermoplastic plastic, wherein an extruded plastic tube (13) is inserted into an open mould (11) having movable mould parts, mould parts forming the container (1) are closed, the tube being expanded by a pressure gradient acting on said tube, to the container (1), preferably in the form of a bellows, and being filled with filling material (15), and the level (23) of the filling material (15) being raised by displacing the container volume in the direction of the container opening, a container closure (5) for the container opening being formed from the tube (13) by closing head jaws (17) of the mould (11), **characterised in that** a part of the plastic tube (13) located in the recesses (25) of the head jaws (17) remains unclosed, forming at least one venting canula (3), and that upon displacing the container volume, the level (23) of the filling material (15) is raised such that at least air is displaced from the container (1) via the respective venting canula (3), and the respective venting canula (3) is closed by closing the head jaws (17) or by auxiliary head jaws (31).

2. The method according to Claim 1, **characterised in that** the venting canula (3) is formed in the region of the upper end of the container closure (5).

3. The method according to Claim 2, **characterised in that** the venting canula (3) is closed directly on the outside of the container closure (5) by means of the auxiliary head jaws (31).

4. The method according to Claim 3, **characterised in that** the venting canula (3) is severed directly at the wall of the container closure (5) by means of the auxiliary head jaws (31).

5. The method according to any of Claims 1 to 4, **characterised in that** the venting canula (3) is formed from a part of the plastic tube (13) that is located outside of the central region of the container closure (5).

6. The method according to any of Claims 1 to 5, **characterised in that** the displacement of the container volume is implemented such that a convexity (9) of the bottom (21) is produced, starting from the bottom (21) of the container into the interior of the container (1).

7. A device for implementing the method according to any of Claims 1 to 6, having movable mould parts for forming a container (1) from an extruded plastic tube (13), **characterised in that** closing surfaces (24) of the main head jaws (17) of the mould (11) that form the container closure (5) have recesses (25) that leave a part of the plastic tube (13) unclosed such as to form at least one venting canula (3), and that auxiliary head jaws (31), which can be moved relative to the main head jaws (17), are able to be moved into an active position that closes the venting canula (3).

8. The device according to Claim 7, **characterised in that** the auxiliary head jaws (31) are integrated into the main head jaws (17) such that these auxiliary head jaws, which penetrate the recesses (25), can be moved into the active position in the direction of the closing motions of the main head jaws (17).

9. The device according to Claim 7 or 8, **characterised in that** the auxiliary head jaws (31) can be moved by means of working cylinders (37) which are located in the main head jaws (17) and can be actuated by means of pressurising media.

## Revendications

1. Procédé de fabrication et de remplissage de récipients (1) en matière plastique thermoplastique, dans lequel on introduit un tube (13) souple en matière plastique extrudé dans un moule (11) ouvert, ayant des parties de moule mobiles, on ferme les parties de moule formant le récipient (1), dans lequel on élargit le tube souple par un gradient de pression agissant sur lui en le récipient (1), de préférence sous la forme d'un soufflet à pli, et on le remplit de produit (15) de remplissage et on élève le niveau (23) du produit (15) de remplissage par déplacement d'un volume du récipient dans la direction de l'ouverture du récipient, dans lequel, en fermant des mâchoires (17) de tête du moule (11), on forme, à partir du tube (13) souple, une fermeture (5) de récipient pour l'ouverture du récipient, **caractérisé en ce qu'**une partie, se trouvant dans les creux (25) des mâchoires (17) de tête, du tube (13) souple en matière plastique, reste non enfermée en formant au moins une canule (3) de mise à l'atmosphère et **en ce que**, lors du déplacement du volume du récipient, on élève le niveau (23) du produit (15) de remplissage, de manière à déplacer au moins de l'air hors du récipient (1) par la canule (3) de mise à l'atmosphère et on ferme la canule (3) de mise à l'atmosphère par fermeture des mâchoires (17) de tête ou de mâchoires (31) de tête supplémentaires.

2. Procédé suivant la revendication 1, **caractérisé en ce que** l'on ferme la canule (3) de mise à l'atmosphère dans la région de l'extrémité supérieure de la fermeture (5) du récipient.

3. Procédé suivant la revendication 2, **caractérisé en ce que** l'on ferme la canule (3) de mise à l'atmosphère par les mâchoires (31) de tête supplémentaires directement sur le côté extérieur de la fermeture (5) du récipient.

4. Procédé suivant la revendication 3, **caractérisé en ce que** l'on sépare la canule (3) de mise à l'atmosphère par les mâchoires (31) de tête supplémentaires directement sur la paroi de la fermeture (5) du récipient.

5. Procédé suivant l'une des revendications 1 à 4, **caractérisé en ce que** l'on ferme la canule (3) de mise à l'atmosphère à partir d'une partie, se trouvant à l'extérieur de la région centrale de la fermeture (5) du récipient, du tube (13) souple en matière plastique.

6. Procédé suivant l'une des revendications 1 à 5, **caractérisé en ce que** l'on effectue le déplacement du volume du récipient de manière à produire, depuis le fond (21) du récipient, une courbure (9) du fond (21) à l'intérieur du récipient (1).

7. Dispositif pour effectuer le procédé suivant l'une des revendications 1 à 6, comprenant des parties de moule mobiles pour mouler un récipient (1) à partir d'un tube (13) souple en matière plastique extrudé, **caractérisé en ce que** des mâchoires (17) de tête principales, formant la fermeture (5) du récipient du moule (1), ont, dans leur surface (24) de fermeture, des creux (25), qui laissent non fermée une partie du tube (13) souple en matière plastique en formant au moins une canule (3) de mise à l'atmosphère et **en ce que**, par rapport aux mâchoires (17) de tête principales, des mâchoires (31) de tête supplémentaires mobiles peuvent être déplacées dans une position active fermant la canule (3) de mise à l'atmosphère.

8. Dispositif suivant la revendication 7, **caractérisé en ce que** les mâchoires (31) de tête supplémentaires sont intégrées aux mâchoires (17) de tête principales, de manière à pouvoir, en traversant les creux (25), être mises en position active dans la direction des mouvements de fermeture des mâchoires (17) de tête principales.

9. Dispositif suivant les revendications 7 et 8, **caractérisé en ce que** les mâchoires (31) de tête supplémentaires sont mobiles au moyen de vérins (37) de travail, se trouvant dans les mâchoires (17) de tête principales et pouvant être actionnés par du fluide sous pression.
